# EUROPEAN PATENT APPLICATION

(11) **EP 2 607 331 A1**
(43) Date of publication of application: **26.06.2013**
(21) Application number: 11194596.0
(22) Date of filing: 20.12.2011
(51) Int. Cl.: C04B 28/02

(54) **Admixture for filler materials**

(71) Applicant: Sika Technology AG, 6340 Baar (CH)
(72) Inventor: Modak, Madhu Sudan, 700009 Kolkata (IN); Dasgupta, Amit, 712102 Chinsurah (IN)
(74) Representative: Sika Patent Attorneys

(57) **Abstract**

A two-component admixture, in particular suitable for increasing flowability and/or compressive strength of filler materials for trenches, includes:
a first component **A** comprising or consisting of:
i) a dispersant, whereby the dispersant comprises a comb polymer;
ii) a surfactant, and
iii) optionally, water; and

a second component **B**, comprising or consisting of a basic compound.

## Description

### Technical field

The invention relates to a two-component admixture, in particular suitable for increasing flowability and/or strength of filler materials for trenches, and its use. Furthermore, the invention deals with a filler composition, as well as a method for the production of a filler composition.

### Background art

High wall mining is a process of fast coal extraction from mines. Thereby, cavities or trenches of up to 300 × 4 × 5 meter are formed after extraction of the coal. For reasons of safety and in order to prevent land collapse, the trenches thus formed needs to be filled up by solid filler material. The solid filler material should be as cheap as possible and available in large amounts. In practice, fly ash, sand, washery trailing, overburden spoil or their combination are used as filler materials.

However, due to their limited flowability, these solid materials are difficult to put in compact form into the trenches. For effective use, it is necessary to convert the solid filler materials into fluids which can be pumped or filled into the trenches.

In this context US 2007/006777 A1 (Setliff et al.) describes e.g. the use of a special type of fly ash which, amongst others, can be used as a mine filler material. Specifically, fly ash is mixed with water, a calcium source and an iron chelating alkanolamine, in order to produce a flowable and fast setting slurry.

However, known methods of producing flowable or fluidized filler materials have several disadvantages: For example, the flowability or homogeneity of the fluidized filler materials are not sufficient for filling large trenches, such as e.g. produced in high wall mining. As well, the development of mechanical strength of the filler materials can be too slow or too fast, or the long term strength is unsatisfactory. Moreover, the hardened filler material produced in the trenches can suffer from poor chemical resistance, or bear a high shrinking risk. As well, some of the know techniques are too expensive or too complicated to use in practice.

There is thus a need to develop alternative and improved methods or admixtures for improving filler materials which overcome the aforementioned drawbacks.

### Disclosure of the invention

It is an object of the present invention to provide an admixture which is suitable for enhancing flow characteristics and strength properties of filler materials, in particular fly ash. Especially, the admixture should be suitable for enhancing flow characteristics and strength properties of filler materials for trenches, in particular in high wall mining, cavities in mines and/or tunnel linings. Another object of the invention is to provide a filler composition that can be used as grout and filled into cavities in an efficient and economic manner.

Surprisingly, it has been found that this object is achieved by the features of claim 1. Accordingly, the core of the invention is a two-part admixture comprising a first component **A** and a second component **B.** Component **A** comprises or consists of:
i) a dispersant, whereby the dispersant comprises a comb polymer;
ii) a surfactant, and
iii) optionally, water.

The second component **B** comprises or consists of a basic compound.

As could be shown, the inventive admixtures allow inter alia enhancing the flow properties of filler materials or grouts for trenches in high wall mining, cavities in mines and tunnel linings. For example, filler materials treated with the admixture show essentially free flowing properties on small slopes of 10 - 20º. This allows an easy and economic filling of cavities, e.g. driven only by gravity. Thus, no additional tools, such as e.g. pumps, are required when filling cavities with the help of the inventive admixture.

Moreover, the inventive admixtures make it possible to produce free flowing filler materials which at the same time feature advantageous hardening properties with respect to trenches in high wall mining, cavities in mines and tunnel linings. Specifically, compressive strengths obtainable with the inventive admixture can be about 1 MPa after 24 hours, 5 MPa after 7 days and 10 MPa after 30 days. On one hand, such kind of compressive strengths are high enough to generate strong support for soil above the filled cavities. On the other hand, these compressive strengths are still low enough to allow easy removal of the filler material at a later time.

As well, filler materials treated with the inventive admixture feature remarkably low volume shrinkage in the filler material after setting and hardening. Typically, volume shrinkage after 1, 7 and 30 days below 5% can be achieved when using the inventive admixture. Since low volume shrinkage will reduce the size of gaps formed between hardened filler material and the boundaries of the cavities, the overall support resistance can be increased.

Additional aspects of the invention are subject of further independent claims. Particularly preferred embodiments are outlined throughout the description and the dependent claims.

### Ways of carrying out the invention

A first aspect of the invention relates to a two-component admixture, in particular suitable for increasing flowability and/or strength of filler materials for trenches, including:
a first component **A** comprising or consisting of:
   i) a dispersant, whereby the dispersant comprises a comb polymer;
   ii) a surfactant, and
   iii) optionally, water;
   and
a second component **B,** comprising or consisting of a basic compound.

In the present context, the expression "two-component admixture" in particular refers to a composition consisting of two individual components or parts. Especially, the two components are present in individual or separated containers or receptacles. In other words, each of the two components is physically separated from the other component before application. However, during application of the admixture, the two components will finally be intermixed.

A "filler material" can in principle be any solid material. For example, the filler material can be fly ash, sand, washery tailings, overburden spoil or combinations thereof. However, preferably, the filler material is a binder material, in particular a hydraulic, latent hydraulic and/or pozzolanic binder material. These are in particular substances that harden because of hydration chemical reactions and produces hydrates that are not water-soluble. In particular, the hydration chemical reactions of the binder takes essentially place independently of the water content. This means that the binder can harden and retain its strength even when exposed to water, e.g. underwater or under high humidity conditions. In contrast, non-hydraulic binders (e.g. air-slaked lime or and gypsum) are at least partially water soluble and must be kept dry in order to retain their strength.

Preferably, the filler material comprises or consists of latent hydraulic and/or pozzolanic binder materials. The term "latent hydraulic and/or pozzolanic binder materials" stands in particular for type II concrete additives with latent hydraulic and/or pozzolanic character according to EN 206-1. In particular, the latent hydraulic or pozzolanic binder material comprises or consists of slag, fly ash, silica fume and/or natural pozzolanes.

Fly ash is highly preferred as a filler material. "Fly ash" denotes a residue generated in combustion, e.g. coal combustion, mainly consisting of silicon dioxide, aluminum oxide and calcium oxide. Suitable fly ash is bottom ash and/or fly ash captured by electrostatic precipitators. Fly ash is advantageous as a filler material in the present context because it is available in large quantities at low cost. Moreover, fly ash is present in powder form which allows forming slurries or grouts with water and admixtures in an easy and economic manner. As well, fly ash as filler material produces optimal compressive strengths for trenches in high wall mining, cavities in mines and tunnel linings. Preferable fly ash is one according to norm EN 450-1.

Especially, the expression "dispersant" refers to a substance that is capable of improving the separation of particles in a suspension and/or that is capable of preventing settling or clumping of particles in a suspension.

The term "surfactant" stands in particular for a compound that lowers the surface tension of a liquid or the interfacial tension between two different phases. In particular, the term "surfactant" does not enclose comb polymers in the present context. Preferably, the surfactant is an amphiphilic compound, especially bearing both, a hydrophobic group as well as a hydrophilic group. In general, the surfactant can be any type of surfactant, such as e.g. an ionic surfactant (anionic as well as cationic), a zwitterionic or amphoteric surfactant, or a non-ionic surfactant. Especially, the surfactant is different from the dispersant.

Within the present context, a "basic compound" is in particular a compound capable of increasing the pH of water, when added to water.

Preferably, the dispersant is a comb polymer with polycarboxylate backbone and polyether side chains. Thereby, in particular, the side chains are connected to the backbone via ester, ether, amide and/or imide groups.

Especially, the comb polymer comprises or consists of:
a) a molar parts of a structural unit **S1** of formula I 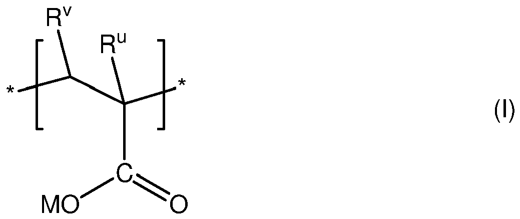
b) b molar parts of a structural unit **S2** of formula II 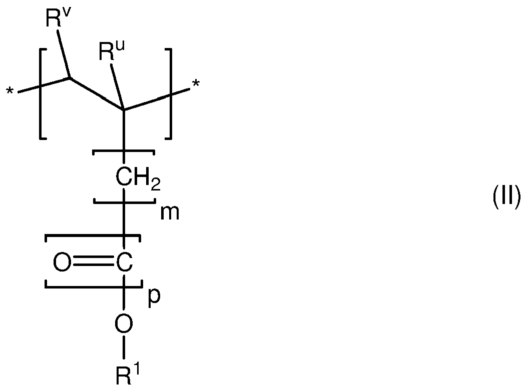
c) c molar parts of a structural unit **S3** of formula III 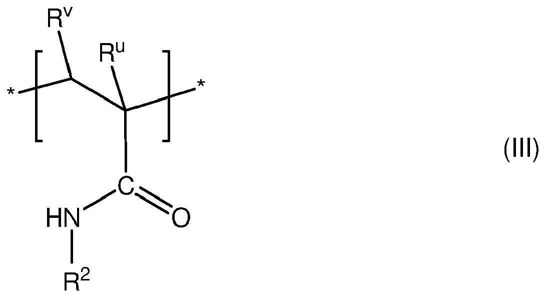
d) d molar parts of a structural unit **S4** of formula IV 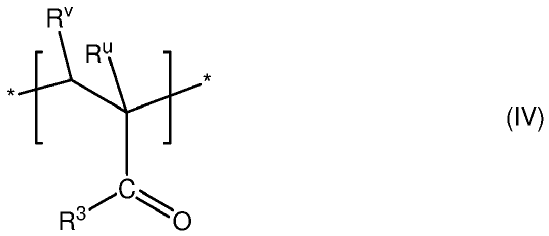 wherby
   each M independently of the others represents H⁺, an alkali metal ion, an alkaline earth metal ion, a di- or trivalent metal ion, an ammonium ion or an organic ammonium group,
   each R^{u} independently of the others represents Hydrogen or a methyl group,
   each R^{v} independently of the others represents Hydrogen or COOM,
   m = 0, 1 or 2,
   p = 0 or 1,
   each R¹ and each R² independently of the others stand for C₁- to C₂₀-alkyl,-cycloalkyl, -alkylaryl or for -[AO]ₙ-R⁴,
   whereby A = C₂- to C₄-alkylene, R⁴ represents H, C₁- to C₂₀-alkyl,-cyclohexyl or -alkylaryl,
   and n = 2 - 250,
   each R³ independently of the others represents NH₂, -NR⁵R⁶, -OR⁷NR⁸R⁹,
   with R⁵ and R⁶ independetly of each other stand for
   C₁- to C₂₀-alkyl, -cycloalkyl -alkylaryl or -aryl,
   or for a hydroxyalkyl- or acetoxyethyl- (CH₃-CO-O-CH₂-CH₂-) or hydroxyisopropyl- (HO-CH(CH₃)-CH₂-) or acetoxyisopropyl group (CH₃-CO-O-CH(CH₃)-CH₂-);
   or R⁵ and R⁶ together form a ring of which the nitrogen is part, to form
   a morpholine or imidazoline ring,
   R⁷ is a C₂ -C₄-alkylene group,
   each R⁸ and R⁹ independently of each other represent C₁- to C₂₀-alkyl, -cycloalkyl, -alkylaryl,
   -aryl or a hydroxyalkyl group,
   and whereby a, b, c and d stand for the molar parts of the structural units **S1, S2, S3** und **S4,** with
   a/b/c/d/ = (0.1 - 0.9) / (0.1 - 0.9) / (0 - 0.8) / (0.0 - 0.8),
   in particular a/b/c/d = (0.3 - 0.9) / (0.1 - 0.7) / (0 - 0.6) / (0.0 - 0.4)
   and with the provision that a + b + c + d = 1.

Thereby, comb polymers with n = 8 - 200, more preferably n = 11 - 150, most preferably n = 20 - 70, turned out to be advantageously.

In particular, the molar parts of the structural units **S1, S2, S3** und **S4** are chosen as follows: a/b/c/d = (0.1-0.9)/(0.1-0.9)/(0-0.5)/(0-0.1), preferably a/b/c/d = (0.1-0.9)/(0.1-0.9)/(0-0.3)/(0-0.06). Furthermore, comb polymers with c + d > 0 have proven to be highly suitable in the present context.

According to an especially advantageous embodiment R^{u} represents a methyl group, R^{v} stands for Hydrogen, m = 0, p = 1 and R¹ represents -[AO]ₙ-R⁴ with n = 20 - 70.

Preferably, A in -[AO]ₙ-R⁴ represents a C₂-alkylene.

Especially, a weight average molecular weight (Mw) of the comb polymer is 5'000 - 150'000 g/mol, in particular 10'000 - 100'000 g/mol. The weight average molecular weight is in particular measured using gel permeation chromatography (GPC) with Polyethylenglycol (PEG) as standard.

In particular, the structural units **S1, S2, S3,** und **S4** together have a combined weight of at least 50 wt.-%, in particular at least 90 wt.-%, preferably at least 95 wt.-%, of the total weight of the comb polymer.

The method for production of the comb polymers is known to the epesron skilled in the art. The comb polymer can e.g. be prepared by free-radical polymerization of the particular monomers of formula Iₘ, IIₘ, IIIₘ and IVₘ. This results in a comb polymer with structural units **S1, S2, S3,** und **S4**. The residuals R^{u}, R^{v}, R¹, R², R³, M, m and p are definded as above.

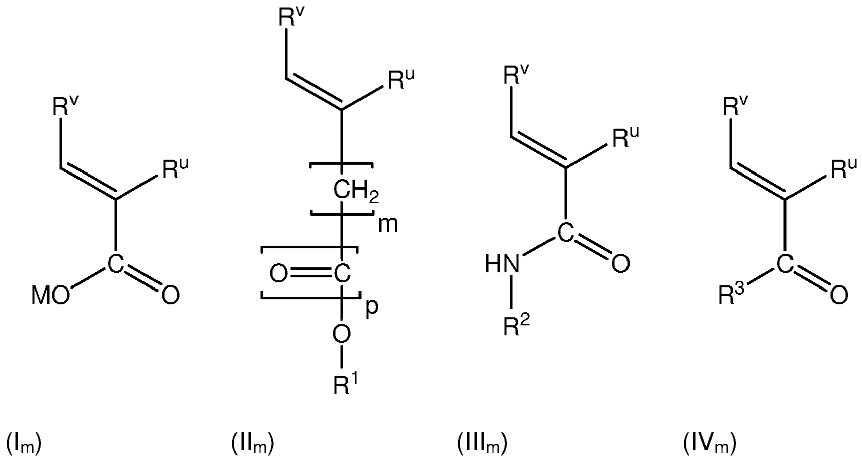

Another possiblity ist o produce the comb polymers by the so-called polymer-analogous reaction of a polycarboxylic acid of the formula V.

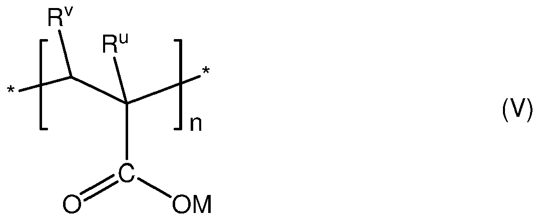

Thereby, n is at least 2, preferably n = 20 - 100, in particular n = 40 - 60. In the polymer-analogous reaction, the polycarboxylic acid of formula V is esterified or amidated with the corresponding alcohols and/or amines (HO-R¹; H₂N-R²; H-R³). Details of the polymer-analogous reaction are disclosed, for example, in EP 1 138 697 B1 on page 7 line 20 to page 8 line 50, and in its examples, or in EP 1 061 089 B1 on page 4 line 54 to page 5 line 38 and in its examples. In a variation thereof as described in EP 1 348 729 A1 on page 3 to page 5 and in its examples, the polymer A can be prepared in the solid state of matter. Corresponding products are commercially available, e.g. from Sika (Switzerland).

The surfactant is in particular an ionic surfactant and/or a salt thereof. The expression "ionic surfactant" stands in particular for a surfactant with a permanent or stable ionic group as hydrophilic group. Most preferably, the surfactant is an anionic surfactant. The ionic surfactant comprises e.g. a sulfate, sulfonate, a phosphate, or a carboxylate group as head group.

Preferably, the surfactant is a salt of an anionic surfactant, in particular an alkali and/or earth alkali metal salt. Highly advantageous are alkali metal salts, especially sodium salts.

According to a highly preferred embodiment, the surfactant comprises a polyether group. Advantageously, the polyether group is hydrophilic. A preferred polyether group is e.g. a polyalkyleneglycol, in particular a polyethylenglycol. Especially, the polyether group acts as a linker group between the hydrophilic head and the hydrophobic tail of the surfactant.

In particular, the surfactant has a structure according to formula V:

Y-[AO]ₛ-R¹⁰ (V)

whereby
Y stands for an anionic group, optionally with a counter cation;
A = C₂- to C₄-alkylene,
R¹⁰ represents a C₆- to C₄₀-alkyl group, and
s = 1 - 6, in particular s = 2 - 4.

Thereby, "s" denotes the average number of C₂- to C₄-alkyleneoxide groups (AO).

Preferably, Y stands for a sulfate group, in particular in combination with an alkali metal ion as counter ion. In particular, A represents a C₂-alkylene. Most preferred, R¹⁰ is a C₁₂- to C₁₅-alkyl group, in particular a C₁₂- to C₁₃-alkyl group.

The surfactant can e.g. be chosen from sodium lauryl ether sulfate (CAS-#: 9004-82-4), sodium myristyl ether sulfate (CAS-#: 025446-80-4) and/or similar substances.

According to a highly preferred embodiment, the surfactant is sodium lauryl ether sulfate, in particular with s = 3. Sodium lauryl ether sulfate, also named sodium laureth sulfate or sodium polyethoxyethyldodecylsulfate, has a structure according to the following formula: CH₃(CH₂)₁₀CH₂(OCH₂CH₂)ₛOSO₃Na.

Such kinds of surfactants turned out to be most efficient in the present context. This is in particular true in combination with a comb polymer with polycarboxylate backbone and polyether side chains as described above.

Preferably, component **A** comprises or consists of 5 - 95 wt.-% of dispersant, 0.1 - 70 wt.-% of surfactant and 0 - 90 wt.-% of water. More preferred, component **A** consists of 10 - 50 wt.-% of dispersant, 1 - 30 wt.-% of surfactant and 20 - 90 wt.-% of water. Especially, component **A** consists of 20 - 40 wt.-% of dispersant, 1 - 20 wt.-% of surfactant and 40 - 80 wt.-% of water.

Especially, an amount of basic compound in component **B** is at least 50 wt.-%, preferably at least 80 wt.-%, in particular at least 95 wt.-%. Apart from unavoidable impurities, component **B** most preferably consists only of the basic compound.

Advantageously, the basic compound comprises or consist of a metal salt, in particular an alkali and/or an earth alkali metal salt. In particular the basic compound comprises an earth alkali metal as a cation and/or a hydroxide as an anion.

Most preferred basic compounds comprise or consist of alkali hydroxide and/or earth alkali hydroxide, in particular hydrated lime or Ca(OH)₂.

Preferably, the first component **A** is present in liquid form and/or the second component **B** is present as a solid, in particular as a powder. Especially, a density of component **A** is 0.9 - 1.2 g/cm³, in particular 1.0 - 1.1 g/cm³. A density of component **B** is 0.2 - 1.0 g/cm³, in particular 0.3 - 0.7 g/cm³.

A second aspect of the present invention deals with a filler composition, in particular for backfilling trenches, comprising an admixture and a filler material. The admixture as well as the filler material is in particular defined as above. A highly preferred filler material is fly ash. Optionally, the filler composition can comprise additional filler material, e.g. sand, washery tailings, overburden spoil or combinations thereof.

In the filler composition, component **A** is preferably present in an amount of 0.01 - 5 wt.-%, in particular 0.1 - 0.5 wt.-%, with respect to the filler material. A preferred amount of component **B** is 0.1 - 10 wt.-%, in particular 0.5 - 4 wt.-%, with respect to the filler material.

Preferably, the filler composition comprises additional water. A suitable ratio of water to the filler material is in the range of 0.2 - 0.8, in particular 0.3 - 0.5. Such filler compositions can directly be used as slurries for filling trenches in high wall mining, cavities in mines and tunnel linings.

A third aspect of the present invention relates to a method for the production of a filler composition whereby an admixture is intermixed with a filler material. The admixture as well as the filler material is in particular defined as above. A highly preferred filler material is fly ash.

In particular, the method comprises the following steps:
i) intermixing component **B** with the filler material in dry state
ii) adding water, in particular with a ratio of water to filler material of 0.2 - 0.8, preferably 0.3 - 0.5, and subsequent mixing,
iii) admixing of component **A.**

Other aspects of the present invention deal with different uses of the inventive admixture. Specifically, the inventive admixture can be used for increasing flowability and/or compressive strength of filler materials, in particular filler materials for trenches in high wall mining, cavities in mines and/or tunnel linings, especially of fly ash. As well, the inventive admixture or filler compositions comprising the inventive admixture can be used in backfilling of cavities, in particular of trenches in high wall mining, cavities in mines and/or tunnel linings.

Further advantageous configurations of the invention are evident from the exemplary embodiments.

### Exemplary embodiments

### 1. Example of a two-component admixture

A comb polymer **KP1** has been produced as described above by polymer-analogous reaction of polymethacrylic acid (M_{w} = 4'500 g/mol) with alcohols of type HO-R¹ and amines of type NH₂-R². The structure of the comb polymer **KP1** is as described above comprising structural units **S1, S2** and **S3** whereby:
- R^{u} = CH₃
- R^{v} = H
- m = 0 and p = 1
- R¹ stands for a mixture of a methoxy terminated polyethylene glycol with mass Mₙ = 1'000 g/mol (PEG1000-OCH₃) and a methoxy terminated polyethylene glycol with mass Mₙ = 3'000 g/mol (PEG3000-OCH₃). Thereby, the molar ratio of PEG1000-OCH3 to PEG3000-OCH₃ equals 0.115:0.138.
- R² is a methoxy terminated copolymer (Mₙ = 2'000 g/mol) of ethylene oxide units and propylene oxide units. The molar ratio between ethylene oxide and proyplene oxide units in the copolymer is 50:50.
- a:b:c:d = 0.745:0.253:0.002:0
- The molecular weight M_{w} of the comb polymer is about 60'000 g/mol.

Table 1 shows an example of an inventive two-component admixture **AM,** consisting of a first component **A** and a second component **B,** both being present in physically separated containers.

Component **A** has been prepared by intermixing all of the ingredients in water at room temperature. Component **A** is present in liquid form with a density of 1.06 g/cm³ at a temperature of 27ºC. Sodium lauryl ether sulfate, which is used as surfactant, is commercially available from various suppliers.

Component **B** consists of commercially available pure hydrated lime or Ca(OH)₂, present as dry powder with a density of 0.5 g/cm³.

**Table 1: Two-component admixture AM**

| **Component** | **Ingredient** | **Amount [wt.%]** |
|---|---|---|
| **A** | **KP1** (dispersant, solid content) | 30 |
| | Sodium lauryl ether sulfate (surfactant) | 10 |
| | Water | 60 |
| **B** | Ca(OH)₂ | > 95 |

### 2. Example of a filler composition

In order to produce a flowable filler composition, 100 parts by weight of fly ash (bottom ash) have been put into a concrete mixer at room temperature. While continuously mixing, 1.6 parts by weight of component **A** (first component of the two component admixture **AM**) have been added to the fly ash. Subsequently, 38.0 parts by weight of water have been added while mixing. After continuous mixing for 1 minute, 0.2 parts by weight of component **B** (second component of the two component admixture **AM**) were added and mixing continued for another 2 minutes. Thereby, flowable filler composition **FC** with a density of 1.620 g/cm³ was obtained.

### 3. Tests with filler composition

For testing the flowability of the freshly produced filler composition **FC,** a standard flow channel with a slope of 10º and a pressure head of 20 cm was used. Thereby, a flow length of at least 300 cm could be achieved, representing a high flowability of filler composition **FC**.

Support resistance was tested by pouring samples of the filler composition **FC** into a 15 cm cube mold and allowing it to harden. The so formed cubes of hardened filler material were then subjected to hydraulic pressure in a similar procedure as defined in norm EN 12390-1 to 3. The support resistance or compressive strength was recorded at different times after preparation of the filler composition **FC**. Simultaneously, the shrinkage of the hardened cubes was determined as well.

Table 2 gives an overview about the compressive strengths and shrinkages of the cubes at different times.

**Table 2: Properties of hardened filler compositions**

| **Time [days]** | **Compressive strength [MPa]** | **Shrinkage [vol.%]** |
|---|---|---|
| 1 | 1.0 | 2.0 |
| 7 | 5.8 | 1.6 |
| 30 | 11.0 | 0.5 |

### 4. Filling of trenches

Filler composition **FC** was used as a backfilling material for trenches in high wall mining. Thereby, whole trenches could completely be filled out with filler composition **FC**. Filling was achieved by letting filler composition flow in to the trenches, driven only by gravity.

### 5. Comparative examples

For reasons of comparison, further filler compositions have been produced and tested.

A first comparative filler composition CF1 was produced similar to filler composition CF described above. However, with comparative filler composition CF1, only component A has been added as admixture while component B has been omitted. The so formed first comparative filler composition CF1 showed a significantly lower compressive strength after 1, 7 and 30 days compared to filler composition FC.

Additionally, a second comparative filler composition CF2 was produced similar to filler composition CF. With comparative filler composition CF2, only component B has been added as admixture while component A has been omitted. The so formed second comparative filler composition CF2 showed a significantly lower flowability than the filler composition FC.

Thus, it will be appreciated by those skilled in the art that the present invention can be embodied in other specific forms without departing from the spirit or essential characteristics thereof. The presently disclosed embodiments are therefore considered in all respects to be illustrative and not restricted.

For example, it is possible to replace some or all of the fly ash by other filler materials, e.g. by washery trailings and/or overburden spoil. Furthermore, the dispersant and/or the surfactant used in the above mentioned experiments can be replaced by substances with similar structure and/or functionality.

## Claims

1. Two-component admixture, in particular suitable for increasing flowability and/or compressive strength of filler materials for trenches, including:
a first component **A** comprising or consisting of:
i) a dispersant, whereby the dispersant comprises a comb polymer;
ii) a surfactant, and
iii) optionally, water;
and
a second component **B**, comprising or consisting of a basic compound.

2. Admixture according to claim 1, **characterized in that** the comb polymer comprises:
a) a molar parts of a structural unit **S1** of formula I 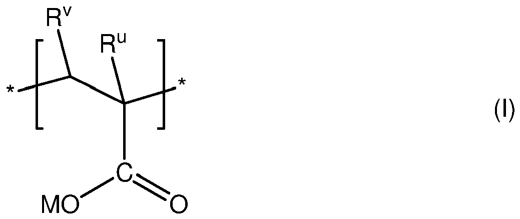
b) b molar parts of a structural unit **S2** of formula II 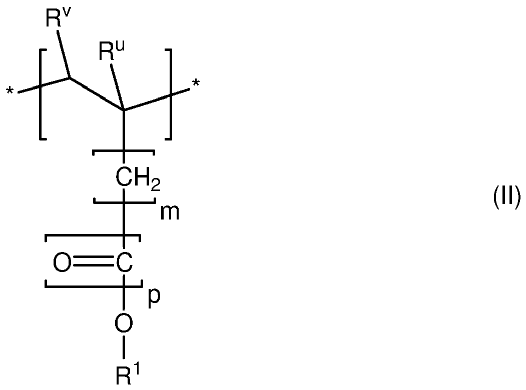
c) c molar parts of a structural unit **S3** of formula III 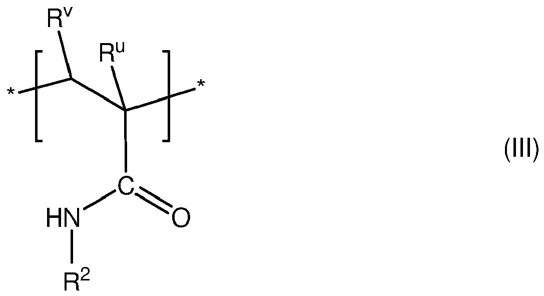
d) d molar parts of a structural unit **S4** of formula IV 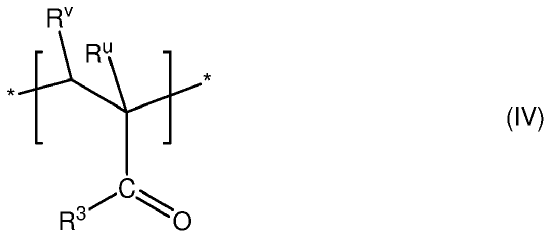 wherby
each M independently of the others represents H⁺, an alkali metal ion, an
alkaline earth metal ion, a di- or trivalent metal ion, an ammonium ion or an organic ammonium group,
each R^{u} independently of the others represents Hydrogen or a methyl group, each R^{v} independently of the others represents Hydrogen or COOM,
m = 0, 1 or 2,
p = 0 or 1,
each R¹ and each R² independently of the others stand for C₁- to C₂₀-alkyl,-cycloalkyl, -alkylaryl or for -[AO]ₙ-R⁴,
whereby A = C₂- to C₄-alkylene, R⁴ represents H, C₁- to C₂₀-alkyl,-cyclohexyl or -alkylaryl,
and n = 2 - 250,
each R³ independently of the others represents NH₂, -NR⁵R⁶, -OR⁷NR⁸R⁹,
with R⁵ and R⁶ independetly of each other stand for
C₁- to C₂₀-alkyl, -cycloalkyl -alkylaryl or -aryl,
or for a hydroxyalkyl- or acetoxyethyl- (CH₃-CO-O-CH₂-CH₂-) or hydroxyisopropyl- (HO-CH(CH₃)-CH₂-) or acetoxyisopropyl group (CH₃-CO-O-CH(CH₃)-CH₂-);
or R⁵ and R⁶ together form a ring of which the nitrogen is part, to form
a morpholine or imidazoline ring,
R⁷ is a C₂ -C₄-alkylene group,
each R⁸ and R⁹ independently of each other represent C₁- to C₂₀-alkyl, -cycloalkyl, -alkylaryl, -aryl or a hydroxyalkyl group, and whereby a, b, c and d stand for the polar parts of the structural units **S1, S2, S3** und **S4,** with
a/b/c/d/ = (0.1 - 0.9) / (0.1 - 0.9) / (0 - 0.8) / (0.0 - 0.8),
in particular a/b/c/d = (0.3 - 0.9) / (0.1 - 0.7) / (0 - 0.6) / (0.0 - 0.4) and with the provision that a + b + c + d = 1.

3. Admixture according to claim 2, **characterized in that** R^{u} represents a methyl group, R^{v} stands for hydrogen, m = 0, p = 1 and R¹ represents -[AO]ₙ-R⁴ with n=20-70.

4. Admixture according to any of preceding claims, **characterized in that** the surfactant is an ionic surfactant and/or a salt thereof.

5. Admixture according to any of preceding claims, **characterized in that** the surfactant has a structure according to formula V:
Y-[AO]ₛ-R¹⁰ (V)
whereby
Y stands for an anionic group
A = C₂- to C₄-alkylene,
R¹⁰ represents a C₆- to C₄₀-alkyl group, and
s=1-6.

6. Admixture according to claim 5, **characterized in that** Y stands for a sulfate group and R¹⁰ stands for a C₁₂- to C₁₅-alkyl group, in particular a C₁₂- to C₁₃-alkyl group.

7. Admixture according to any of preceding claims, **characterized in that** the surfactant is sodium lauryl ether sulfate, in particular with s = 3.

8. Admixture according to any of preceding claims, **characterized in that** component **A** comprises 10 - 50 wt.-% of dispersant, 1 - 30 wt.-% of surfactant and 20 - 90 wt.-% of water.

9. Admixture according to any of preceding claims, **characterized in that** the basic compound comprises or consists of an alkali hydroxide and/or an earth alkali hydroxide, in particular hydrated lime or Ca(OH)₂.

10. Filler composition, in particular for backfilling trenches, comprising an admixture according to any of claims 1 - 9 and a filler material, in particular fly ash.

11. Filler composition according to claim 11, **characterized in that** component **A** is present in an amount of 0.01 - 5 wt.-%, in particular 0.1 - 0.5 wt.-%, with respect to the filler material and/or component **B** is present in an amount of 0.1 - 10 wt.-%, in particular 0.5 - 4 wt.-%, with respect to the filler material.

12. Use of an admixture according to any of claims 1 - 9 for increasing flowability and/or compressive strength of filler materials, in particular fly ash.

13. Use of an admixture according to any of claims 1 - 9 or a filler composition according to any of claims 10 - 11 for backfilling of cavities, in particular of trenches in high wall mining, cavities in mines and/or tunnel linings.

14. Method for the production of a filler composition according to any of claims 10 - 11 whereby an admixture according to any of claims 1 - 9 is intermixed with a filler material, in particular fly ash.

15. Method according to claim 14, comprising the steps of:
i) intermixing component **B** with the filler material in dry state
ii) adding water, in particular with a ratio of water to filler material of 0.2 - 0.8 and subsequent mixing
iii) admixing of component A.
